# EUROPEAN PATENT APPLICATION

(11) **EP 3 473 960 A1**
(43) Date of publication of application: **24.04.2019**
(21) Application number: 17801586.3
(22) Date of filing: 14.06.2017
(51) Int. Cl.: F28D 20/00

(54) **BOREHOLE-TYPE SEASONAL HEAT STORAGE SYSTEM CAPABLE OF SELECTING HEAT STORAGE SPACE ACCORDING TO SUPPLY TEMPERATURE OF HEAT SOURCE**

(30) Priority: 15.06.2016 KR 20160074352
(71) Applicant: Korea District Heating Engineering Co., Ltd., Seongnam-si, Gyeonggi-do 13591 (KR)
(72) Inventor: AHN, Ik-Ro, Yongin-si Gyeonggi-do 16908 (KR)
(74) Representative: Michalski Hüttermann & Partner Patentanwälte mbB
(86) International application number: PCT/KR2017/006169
(87) International publication number: WO 2017/217751

(57) **Abstract**

The present invention relates to a borehole seasonal heat storage system, and more particularly, to a borehole seasonal heat storage system capable of selecting storing space in accordance with supply temperature of heat source for forming a seasonal heat storage body by arranging a member of n-heat storage pipe to the outside of a member of a first heat storage pipe at proper intervals after forming the member of the first heat storage pipe, which comprises ring-shaped supply pipe and recovery pipe and U-shaped vertical pipes connected to a bottom for being inserted to boreholes, and the member of the n-heat storage pipe, which comprises larger diameters of supply pipe and recovery pipe than those of the supply pipe and recovery pipe of the first heat storage pipe, and for improving heat storage efficiency by supplying and storing heat with the member of the first heat storage pipe or the member of the n-heat storage pipe, which corresponds to relevant temperature, in accordance with supply temperature of heat source by measuring supply temperature of heat source, flowing into a main supply pipe, and ground temperature of each part of the seasonal heat storage body.

## Description

### [Technical Field]

The present invention relates to a borehole seasonal heat storage system, and more particularly, to a borehole seasonal heat storage system capable of selecting storing space in accordance with supply temperature of heat source for forming a seasonal heat storage body under the ground by arranging a member of n-heat storage pipe to the outside of a member of a first heat storage pipe at proper intervals after forming the member of the first heat storage pipe, which comprises ring-shaped supply pipe and recovery pipe and U-shaped vertical pipes connected to a bottom for being inserted to boreholes, and the member of the n-heat storage pipe, which comprises larger diameters of supply pipe and recovery pipe than those of the supply pipe and recovery pipe of the first heat storage pipe, and for improving heat storage efficiency by supplying and storing heat with the member of the first heat storage pipe or the member of the n-heat storage pipe, which corresponds to relevant temperature, in accordance with supply temperature of heat source by measuring supply temperature of heat source, flowing into a main supply pipe, and ground temperature of each part of the seasonal heat storage body.

### [Background Art]

Historically, economic boom has increasingly led to energy use and greenhouse-gas emissions. For the sake of getting out of high price variability in fossil fuels such oil, coal, and natural gas, it is a situation that dependence on fossil fuels should be reduced. As climate change due to increased greenhouse-gas emissions becomes a global problem, the use of new & renewable energy is inevitable. Especially, the first and second oil crisis of the 1970s and environmental pollution like global warming, ozone layer depletion, etc., resulted in fossil fuel use limitation and activated utilization of new & renewable energy worldwide. Then, each country has set up targets for reducing greenhouse gas by 2025∼2030, established and tried to perform several commitments.

New & renewable energy(including geothermal heat, sunlight, wind power, tidal power, wave power, biodiesel, biofuel, biogas, waste, etc.) in OECD countries has been remarkably growing up by an annual rate of 2.5% over the last 40 years. In particular, new & renewable energy in OECD countries grew up from 1.6 billion toe in 1971 to 4.4 billion toe in 2012, recording high growth by an annual rate of 2.8% during this period(as for sunlight and wind power, increased by an annual rate of 18.8% in the same period as compared to other energy source). This is caused by policy enforcement of energy expansion like sunlight and wind power of corresponding countries. And, nations have been establishing cooperative system for reducing fossil fuel energy around the world and research for improving technology as International Energy Associates(IEA) business has been actively ongoing.

Korea's new & renewable energy facilities have small size when compared to existing energy facilities, low capital costs, and technology-intensive. Thus, high-performing and competitively-priced technology dominates market, having demand in new & renewable technology with high reliability, new & renewable energy plus energy storage technology(heat storage system), and new & renewable energy plus Smart Grid.

Influence on environmental regulations is insignificant except few new & renewable energy like wind power, tidal power, etc., and nuclear energy and firepower have effect on surrounding situation. However, solar heat, sunlight and fuel cells are easy to be installed to buildings and influence on environmental regulations is relatively small.

In the beginning, there was no room for consideration of commercialization based on technology development in the Korea's new & renewable energy facilities, but various systems for promotion have been installed and actively applied, thereby spreading to markets at home and abroad. Among new & renewable energy supply businesses, housing support business aims to supply new & renewable energy up to about 10% of the housing gradually by 2020, currently supplying sunlight, solar heat, fuel cells, geothermal heat, etc., to 1 million households of about 12.5 million households.

Meanwhile, fossil fuels are replaced to solar energy, referring to green energy with no environmental pollution, different from fossil fuels, discharging carbon dioxide. Thus, this relates to an industry which may be the most active in responding to environmental regulations and is also essential in Korea in consideration of energy consumption and characteristics of demand.

Depending on collector temperature, application of solar energy is classified into low temperature field and middle-high temperature field. Cooling, heating, hot water supply, and large-scale hot water supply facilities in buildings are mostly included in low temperature field. And, industrial process heat, heat development and other special fields are applied in middle-high temperature field.

Main technologies applied to a solar heat system are categorized into a solar heat collecting technology, a solar heat storage technology, and a solar heat application technology.

Among them, a seasonal heat storage system is applied as a solar heat storage technology.

As a heat storage method for storing remaining surplus heat during the non-heating period for utilization during the heating period when heat consumption is high, seasonal heat storage uses annually producing (waste)heat, such as development waste heat, industrial waste heat, waste incineration, fuel cells, biomass, solar heat, etc., as heat source. And, it enables to recover even heat, which is difficult to be used in electricity production or for industry because of being intermittent, unstable emission temperature, or low temperature, and then to be utilized for cooling and heating in buildings or agriculture.

In Korea, studies have been started since the mid-90s; in 2016, a seasonal heat storage system for storing solar heat was established at Jincheon Eco-friendly Energy Town; and the seasonal heat storage system for mostly utilizing solar heat has been developed and operated in Europe, reporting that economic effects is 50% higher as compared to single solar heating.

In addition, solar heat block heating or solar heat district heating(so called, 'solar heat block heating') refers to a solar heat system in a series of centralized heat-supply types for heat storing and supplying stored solar heat from a center by linking a solar collector, distributed or intensively installed in complex(roof of building or other spaces installable) over a certain size, in one system and connecting to a large-scale long-term heat storage system, a seasonal heat storage body.

Size may be variously changed from small-size complex to district heating, and such solar heat block heating system generally requires the large-scale midlong-term seasonal heat storage system in which solar heat, remaining during from spring with low heat load to fall, is stored and utilized when needed.

The solar heat block heating system may be complexly configured not only to existing heat facilities, but to other new & renewable heating systems such as geothermal heat pumps, biofuels, wood pallets, waste energy, etc. And, due to supply of whole heat load with new & renewable energy only, it enables to build with strengths of new & renewable energy and make up for demerits, thereby maximizing the utilization of natural energy such as solar heat.

Also, it is possible to enhance solar heat dependency ratio since surplus heat remaining during the non-heating period through the seasonal heat storage is stored and utilized; solar heat is available throughout the year, thereby effectively applying to heating area, which has been considered as weakness in solar heat area; it is possible to strengthen economic feasibility and to highly contribute to carbon dioxide reduction effect in Korea, where dependency of fossil fuels is high; and in case that the seasonal heat storage system is applied to areas with high building density where there are limitations on application of new & renewable energy for each building, it is anticipated that efficient connection to existing heat source results in wide expanding supply.

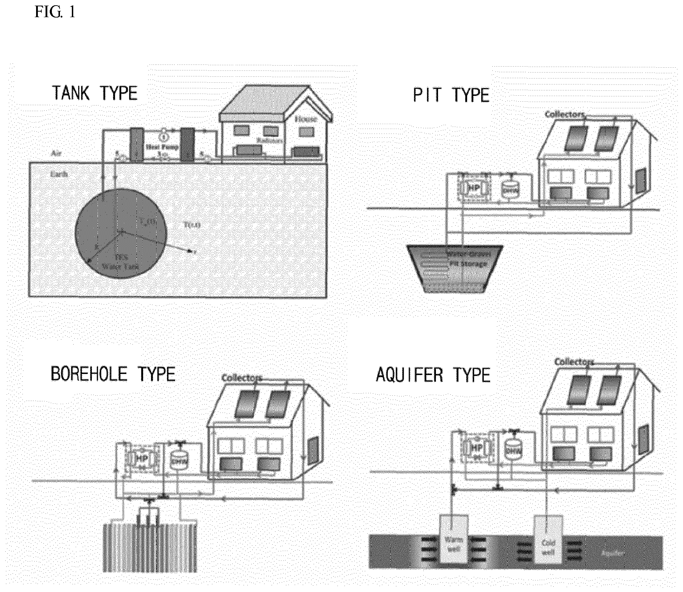

Meanwhile, such seasonal heat storage system is largely divided into four types, i.e., as illustrated in FIG. 1, a tank type of laying a tank together under the ground, a pit type of forming a pit on rock formation and injecting heat storage materials to the inside of pit, a borehole type of laying a U-shaped pipe under the ground vertically, and an aquifer type of digging two tube wells in an aquifer, drawing in underground water in one spot and injecting to another spot.

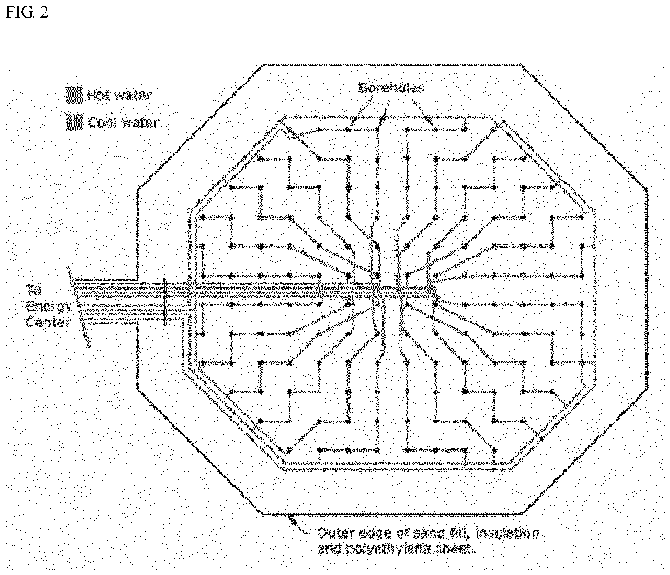

Among them, as illustrated in FIG. 2, the borehole type lays a pipe under the ground vertically for forming a seasonal heat storage body, in which heat flows into a center and goes out in all directions when viewed from above.

However, whereas such borehole type is suitable for storing heat produced from a single heat source at a constant temperature, heat may not be effectively stored because heat flows into a center and goes out in spite of low supply temperature of heat source, in case that heat produced from temperature-changing heat source or several heat sources with various temperatures is stored.

### [Detailed explanations of the invention]

### [Technical Problem]

For solving above problems, the object of the present invention is to provide a borehole seasonal heat storage system capable of selecting storing space in accordance with supply temperature of heat source for forming a seasonal heat storage body by arranging a member of n-heat storage pipe to the outside of a member of a first heat storage pipe at proper intervals after forming the member of the first heat storage pipe, which comprises ring-shaped supply pipe and recovery pipe and U-shaped vertical pipes connected to a bottom for being inserted to boreholes, and the member of the n-heat storage pipe, which comprises larger diameters of supply pipe and recovery pipe than those of the supply pipe and recovery pipe of the first heat storage pipe, and for supplying and storing heat with the member of the first heat storage pipe or the member of the n-heat storage pipe, which corresponds to relevant temperature, in accordance with supply temperature of heat source by measuring supply temperature of heat source, flowing into a main supply pipe, and ground temperature of each part of the seasonal heat storage body.

### [Technical Solution]

To accomplish above objects, the present invention is characterized by a borehole seasonal heat storage system capable of selecting storing space in accordance with supply temperature of heat source, comprising: a main supply pipe for being supplied with heat from heat source; a main recovery pipe for recovering low-temperature heat media to heat source after delivering heat under the ground; a seasonal heat storage body including a member of a heat storage pipe which consists of a partially-cut ring-shaped supply pipe, a recovery pipe formed in a pair in parallel at a side of the supply pipe, and a plurality of U-shaped vertical pipes whose one end is connected to a bottom side of the supply pipe and another end is connected to a bottom side of the recovery pipe, thereby each being inserted to boreholes, wherein there are a plurality of members of heat storage pipes, installed, whose diameter expands toward a low temperature part outside on the basis of a high temperature part, a center part, and each of the supply pipe and the recovery pipe is connected to the main supply pipe and the main recovery pipe; a first temperature sensor, installed in the main supply pipe, for measuring supply temperature of heat source; second temperature sensor parts, installed in a plural type to any of boreholes of the seasonal heat storage body, for measuring ground temperature; a solenoid valve part installed between the main supply pipe and each supply pipe of the seasonal heat storage body and between the main recovery pipe and each recovery pipe of the seasonal heat storage body; and a controller for controlling opening and closing of the solenoid valve part by receiving supply temperature of heat source and ground temperature from the first temperature sensor and the second temperature sensor parts upon storing heat and then, by supplying and storing heat of the main supply pipe to the member of the heat storage pipe of the seasonal heat storage body, which corresponds to the supply temperature of heat source.

Here, the member of the heat storage pipe of the seasonal heat storage body forms the vertical pipes of equal length, or shortens as going from the low temperature part to the high temperature part.

Here, the heat storage body comprises a tank or a pit in the high temperature part.

Here, the vertical pipes of the member of the heat storage pipe in the seasonal heat storage body are formed in a zigzag in the tank or the pit.

Here, the controller controls opening and closing of the solenoid valve part for heat radiation throughout the member of the heat storage pipe of the seasonal heat storage body, which corresponds to target temperature of heat radiation, by receiving ground temperature from the second temperature sensor parts upon heat radiation.

### [Advantageous Effects]

According to a borehole seasonal heat storage system capable of selecting storing space in accordance with supply temperature of heat source of the present invention, as constituted above, it enables to store low-temperature heat, improve system efficiency as compared to an existing method for storing heat above a certain temperature only because output may be dramatically changed depending on weather condition as for solar heat, output desired temperature when using heat, and increase the amount of the stored heat as for temperature-changing heat source.

### [Description of Drawings]

FIG. 1 is a drawing showing types and constitutions of seasonal heat storage systems.
FIG. 2 is a plane view showing a borehole type among seasonal heat storage systems.
FIG. 3 is a schematic diagram showing the constitution of a borehole seasonal heat storage system capable of selecting storing space in accordance with supply temperature of heat source according to embodiment of the present invention.
FIG. 4 is a plane view showing the constitution of a member of a heat storage pipe of FIG. 3.
FIG. 5 is a partial perspective view showing the partial constitutions of the member of the heat storage pipe of FIG. 3.
FIGs. 6 to 8 are schematic diagrams showing the constitutions of the borehole seasonal heat storage system capable of selecting storing space in accordance with supply temperature of heat source according to other embodiments of the present invention.

### [Description of the preferred embodiments]

The configuration of a borehole seasonal heat storage system capable of selecting storing space in accordance with supply temperature of heat source, according to the present invention, will be described in detail with the accompanying drawing.

In the following description of the present invention, a detailed description of known incorporated functions and configurations will be omitted when to include them would make the subject matter of the present invention rather unclear. Also, the terms used in the following description are defined taking into consideration the functions provided in the present invention. The definitions of these terms should be determined based on the whole content of this specification, because they may be changed in accordance with the option of a user or operator or a usual practice.

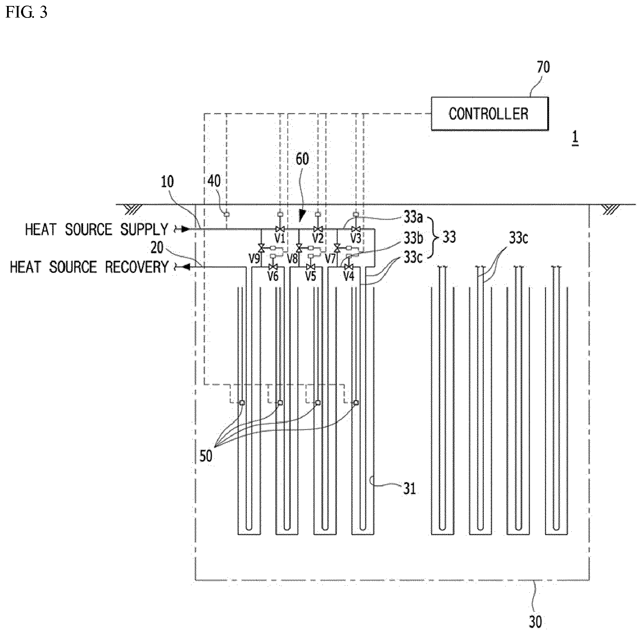

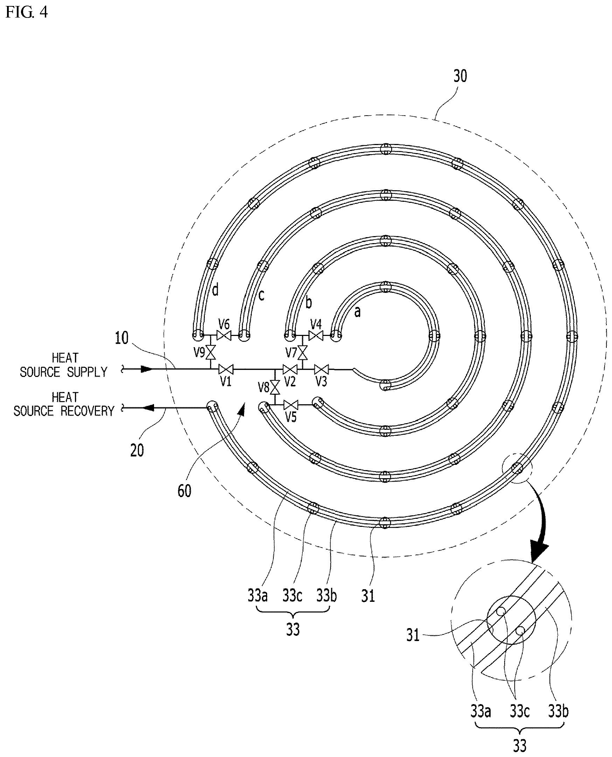

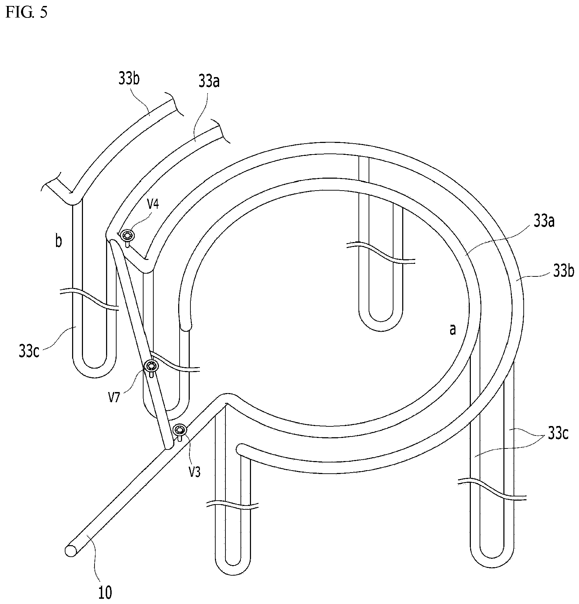

FIG. 3 is a schematic diagram showing the constitution of a borehole seasonal heat storage system capable of selecting storing space in accordance with supply temperature of heat source according to embodiment of the present invention; FIG. 4 is a plane view showing the constitution of a member of a heat storage pipe of FIG. 3; and FIG. 5 is a partial perspective view showing the partial constitutions of the member of the heat storage pipe of FIG. 3.

Referring to FIGs. 3 to 5, a borehole seasonal heat storage system(1) capable of selecting storing space in accordance with supply temperature of heat source according to embodiment of the present invention consists of a main supply pipe(10), a main recovery pipe(20), a seasonal heat storage body(30), a first temperature sensor(40), second temperature sensor parts(50), a solenoid valve part(60) and a controller(70).

First, the main supply pipe(10) is provided with heat in a solar collector(not illustrated), for example.

Then, the main recovery pipe(20) recovers heat media, whose temperature falls after storing heat in the seasonal heat storage body(30), to the solar collector(not illustrated).

Also, the seasonal heat storage body(30) is perforated with a plurality of boreholes(31) under the ground and stores heat from heat source by installing a member of a heat storage pipe(33).

Here, the member of the heat storage pipe(33) consists of: a partially-cut ring-shaped supply pipe(33a); a recovery pipe(33b) formed in a pair in parallel at a side of the supply pipe(33a); and a plurality of U-shaped vertical pipes(33c) whose one end is connected to a bottom side of the supply pipe(33a) and another end is connected to a bottom side of the recovery pipe(33b), thereby each being inserted to boreholes(31), wherein there are a plurality of members of heat storage pipes(33), installed, whose diameter expands toward a low temperature part outside on the basis of a high temperature part, a center part. Here, the supply pipe(33a) and the recovery pipe(33b) of each member of the heat storage pipe(33) are connected to the main supply pipe(10) and the main recovery pipe(20); vertical pipes(33c) of the member of the heat storage pipe(33) are equal in length as illustrated in FIG. 3; and four types(a, b, c, d) are illustrated in embodiment of the present invention. Further, the recovery pipe(33b) of each member of the heat storage pipe(33) is connected to the supply pipe(33a) of the member of the heat storage pipe(33), positioned to adjacent outside and then, heat is supplied from the supply pipe(33a) of any member of the heat storage pipe(33) to the recovery pipe(33b). Then, heat goes to the recovery pipe(33b) after passing to the supply pipe(33a) of the member of the heat storage pipe(33), located outside, again.

Also, it is desirable that boreholes(41) are formed in several meters of gap, and the length of the vertical pipes(33c) is the same as the diameter of the seasonal heat storage body(30) for minimizing heat loss(the rounder the shape is, the more heat loss is minimized).

Further, installed in the main supply pipe(10), the first temperature sensor(40) measures supply temperature of heat source.

Continuously, there are a plurality of the second temperature sensor parts(50) installed to any of boreholes(31) of the seasonal heat storage body(30), thereby measuring heat storage temperature(Ta, Tb, Tc, Td). Here, it is desirable that each sensor of the second temperature sensor parts(50) is placed to a bottom side of the center of boreholes, and at least more than one sensor is formed to each borehole(31) to which each member of the heat storage pipe(33) is installed.

Further, as illustrated in FIGs. 3 and 4, installed between the main supply pipe(10) and the member of the heat storage pipe(33), each of a plurality of solenoid valves(V1∼V9) of the solenoid valve part(60) is opened and closed by the controller(70), thereby being installed between the main supply pipe(10) and each supply pipe(33a) of the seasonal heat storage body(30) and between the main recovery pipe(20) and each recovery pipe(33b) of the seasonal heat storage body(30) for selectively supplying heat to each member of the heat storage pipe(33).

In addition, the controller(70) controls opening and closing of the solenoid valve part(60) by receiving supply temperature of heat source and ground temperature from the first temperature sensor(40) and the second temperature sensor parts(50) upon storing heat and then, by supplying and storing heat of the main supply pipe(10) to the member of the heat storage pipe(33) of the seasonal heat storage body(30), which corresponds to the supply temperature of heat source. Here, the controller(70) controls opening and closing of the solenoid valve part(60) for heat radiation throughout the member of the heat storage pipe(33) of the seasonal heat storage body(30), which corresponds to target temperature of heat radiation, by receiving ground temperature from the second temperature sensor parts(50) upon heat radiation.

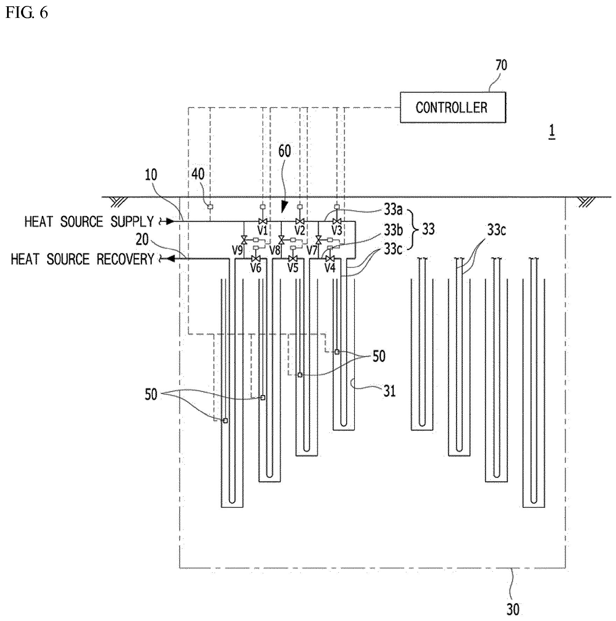

Meanwhile, the borehole seasonal heat storage system(1) capable of selecting storing space in accordance with supply temperature of heat source according to other embodiment of the present invention may form vertical pipes(33c) in different length, or form a tank(T) or a pit(P), as illustrated in FIGs. 6 to 8.

FIGs. 6 to 8 are schematic diagrams showing the constitutions of the borehole seasonal heat storage system capable of selecting storing space in accordance with supply temperature of heat source according to other embodiments of the present invention.

As illustrated in FIG. 6, the vertical pipes(33c) of the member of the heat storage pipe(33) may shorten from the low temperature part to the high temperature part, wherein it is possible to minimize heat loss by focusing high-temperature heat on a center part if the high temperature part becomes smaller in length.

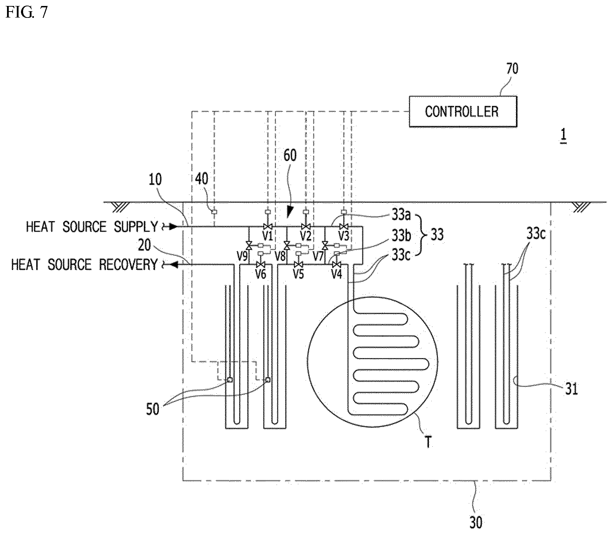

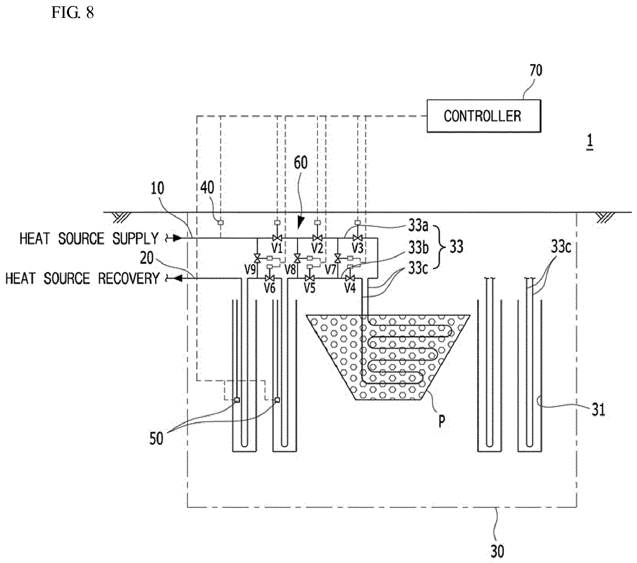

Furthermore, as illustrated in FIGs. 7 and 8, the seasonal heat storage body(30) may include the tank(T) or the pit(P) in the high temperature part. Here, it is desirable that the vertical pipes(33c) of the member of the heat storage pipe(33) in the seasonal heat storage body(30) are formed in a zigzag in the tank(T) or the pit(P) for maximizing heat exchange performance.

First, upon storing heat, the controller(70) receives supply temperature of heat source and ground temperature from the first temperature sensor(40) and the second temperature sensor parts(50).

Then, in case that supply temperature of heat source is over Ta as compared to supply temperature of heat source and ground temperature(Ta, Tb, Tc, Td), the controller(70) closes solenoid valves(V7, V8, V9) of the solenoid valve part(60) for making heat flow gradually from a center of the seasonal heat storage body(30) to an outer part and opens the rest, thereby supplying heat to a of the seasonal heat storage body(33), which is a center, for heating and then, discharging heat while heating followed by b, c, d.

Further, in case that supply temperature of heat source is under Ta, but over Tb as compared to supply temperature of heat source and ground temperature(Ta, Tb, Tc, Td), the controller(70) closes solenoid valves(V3, V4, V8, V9) of the solenoid valve part(60) and opens the rest, thereby supplying heat to b of the seasonal heat storage body(33) for heating and then, discharging heat while heating followed by c, d.

Furthermore, in case that supply temperature of heat source is under Tb, but over Tc as compared to supply temperature of heat source and ground temperature(Ta, Tb, Tc, Td), the controller(70) closes solenoid valves(V2, V5, V9) of the solenoid valve part(60) and opens the rest, thereby supplying heat to c of the seasonal heat storage body(33) for heating and then, discharging heat while heating followed by d.

In addition, in case that supply temperature of heat source is under Tc, but over Td as compared to supply temperature of heat source and ground temperature(Ta, Tb, Tc, Td), the controller(70) closes solenoid valves(V1, V6) of the solenoid valve part(60) and opens the rest, thereby supplying heat to d only of the seasonal heat storage body(33) for heating and then, discharging heat.

Meanwhile, upon heat radiation, the controller(70) controls in a manner of the above method by receiving ground temperature from the second temperature sensor parts(50) and comparing target temperature of heat radiation and ground temperature. However, upon heat radiation, flow direction(not illustrated) of heat media is contrary to flow which is illustrated in FIGs. 3, 4, 6, 7 and 8.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**<Explanation on reference numeral>**

| | |
|---|---|
| 10: main supply pipe | 20: main recovery pipe |
| 30: seasonal heat storage body | 31: boreholes |
| 33: member of heat storage pipe | 33a: supply pipe |
| 33b: recovery pipe | 33c: vertical pipes |
| 40: first temperature sensor | 50: second temperature sensor parts |
| 60: solenoid valve part | 70: controller |
| P: pit | T: tank |

## Claims

1. A borehole seasonal heat storage system capable of selecting storing space in accordance with supply temperature of heat source, comprising: a main supply pipe for being supplied with heat from heat source; a main recovery pipe for recovering heat; a seasonal heat storage body including a member of a heat storage pipe which consists of a partially-cut ring-shaped supply pipe, a recovery pipe formed in a pair in parallel at a side of the supply pipe, and a plurality of U-shaped vertical pipes whose one end is connected to a bottom side of the supply pipe and another end is connected to a bottom side of the recovery pipe, thereby each being inserted to boreholes, wherein there are a plurality of members of heat storage pipes, installed, whose diameter expands toward a low temperature part outside on the basis of a high temperature part, a center part, and each of the supply pipe and the recovery pipe is connected to the main supply pipe and the main recovery pipe; a first temperature sensor, installed in the main supply pipe, for measuring supply temperature of heat source; second temperature sensor parts, installed in a plural type to any of boreholes of the seasonal heat storage body, for measuring ground temperature; a solenoid valve part installed between the main supply pipe and each supply pipe of the seasonal heat storage body and between the main recovery pipe and each recovery pipe of the seasonal heat storage body; and a controller for controlling opening and closing of the solenoid valve part by receiving supply temperature of heat source and ground temperature from the first temperature sensor and the second temperature sensor parts upon storing heat and then, by supplying and storing heat of the main supply pipe to the member of the heat storage pipe of the seasonal heat storage body, which corresponds to the supply temperature of heat source.

2. The system according to claim 1, wherein the member of the heat storage pipe of the seasonal heat storage body forms the vertical pipes of equal length, or shortens as going from the low temperature part to the high temperature part.

3. The system according to claim 1, wherein the heat storage body comprises a tank or a pit in the high temperature part.

4. The system according to claim 3, wherein the vertical pipes of the member of the heat storage pipe in the seasonal heat storage body are formed in a zigzag in the tank or the pit.

5. The system according to claim 1, wherein the controller controls opening and closing of the solenoid valve part for heat radiation throughout the member of the heat storage pipe of the seasonal heat storage body, which corresponds to target temperature of heat radiation, by receiving ground temperature from the second temperature sensor parts upon heat radiation.
